# EUROPÄISCHE PATENTSCHRIFT

(11) **EP 0 465 714 B1**
(45) Veröffentlichungstag und Bekanntmachung des Hinweises auf die Patenterteilung: **05.04.1995**
(21) Anmeldenummer: 90113492.4
(22) Anmeldetag: 13.07.1990
(51) Int. Cl.: B23K 3/047

(54) **Keramischer Lötbügel**
Bow-shaped soldering tip made of ceramic
Panne de fer à souder en étrier céramique

(43) Veröffentlichungstag der Anmeldung: 15.01.1992
(73) Patentinhaber: SIEMENS AKTIENGESELLSCHAFT, 80333 München (DE)
(72) Erfinder: Schröttle, Wilhelm, Dipl.-Ing., D-8000 München 83 (DE)

(56) Entgegenhaltungen:
- EP-A- 0 357 977
- US-A- 4 412 123
- IBM TECHNICAL DISCLOSURE BULLETIN. vol. 11, no. 8, Januar 1969, NEW YORK USSeite 1026 N.F. JENSEN: "SELF-LEVELING SOLDERING TOOL"

## Beschreibung

Die Erfindung betrifft einen keramischen Lötbügel zum Löten mittels Widerstandserwärmung gemäß dem Oberbegriff des Anspruchs 1 (siehe FR-A-1 366 277), insbesondere zum Reflow-Löten von elektronischen Bauelementen, die in der Regel eine Vielzahl von Anschlußbeinen aufweisen.

Über die in Lötvorrichtungen verwendeten Lötbügel wird in der Regel eine bestimmte Kraft auf die Anschlußbeine von elektronischen Bauelementen ausgeübt. Das Andrücken der Lötpartner und die Wärmeübertragung für den Lötprozeß bzw. die Erzeugung der nötigen Wärme geschehen in der Regel durch den Lötbügel. Dabei sind die gängigen Ausführungsformen so ausgebildet, daß die in einer Reihe nebeneinander angeordneten Anschlußbeinchen von einem leistenförmigen Lötbügel, beispielsweise ein u-förmiges Bauteil mit langem Quersteg, angedrückt und erwärmt werden. Ist der Lötbügel aus elektrisch leitendem Material, wobei die Wärmeerzeugung durch Widerstandserwärmung im Lötbügel geschieht, so besteht die Gefahr einer Beschädigung eines elektronischen Bauelementes durch den zwischen verschiedenen Anschlußbeinchen auftretenden Spannungsabfall innerhalb des Lötbügels. Hierdurch im Bauelement erzeugte Ströme können nachteilige Folgen haben.

Die im allgemeinen eingesetzte Technik des Reflow-Lötens mittels eines Lötbügels ist zur Vermeidung der beschriebenen Nachteile weiterentwickelt worden. Zur Vermeidung eines Spannungsabfalles zwischen den einzelnen elektrischen Anschlüssen kann beispielsweise mit niedriger Spannung gearbeitet werden. Die beschrittene Entwicklungsrichtung hat jedoch nicht diese Niederspannungstechnik favorisiert, sondern hat versucht durch den Einsatz verschiedener Materialien Spannungsabfälle entlang eines Lötbügels in den Griff zu bekommen.

Im einzelnen kann die Verringerung des Spannungsabfalles zwischen verschiedenen Anschlußbeinchen eines elektronischen Bauelementes beim Bügellöten neben dem Einsatz der Niederspannungstechnik durch folgende Maßnahmen verringert werden:
- das Material des Lötbügels weist einen niedrigen ohm'schen Widerstand auf und der Lötbügel ist in mehrere Lötbügelelemente, die elektrisch parallel geschaltet sind, aufgeteilt. Bei dieser Variante müssen ausreichend große Leiterquerschnitte verwendet werden.
- Ein Lötbügel kann aus u-förmig aufgebogenem Blech hergestellt werden. Die Breite eines derartigen Lötbügels ist nach unten hin durch die Blechstärke und den notwendigen Biegeradius begrenzt. Mittels dieser Variante kann jedoch durch die Kontaktierung jeweils eines u-förmigen Lötbügels mit einem Anschlußbein der Spannungsabfall zwischen verschiedenen Anschlußbeinchen eliminiert werden.

Weiterentwicklungen, die den begrenzten Einbauraum von Lötbügeln berücksichtigen, haben zur elektrischen Isolierung der Lötbügel an ihrer Kontaktierfläche in Richtung der Anschlußbeine eine Beschichtung mit einer Keramik vorgesehen. Einfache Beschichtungen bergen jedoch die Gefahr des Abplatzens der Keramikschicht aufgrund unterschiedlicher Wärmeausdehnungskoeffizienten am Lötbügel und an der keramischen Schicht.

In der EP-A-357 977 wird ein Lötbügel beschrieben, der einen in eine Nut des Lötbügels eingeklebten Keramikstreifen bzw. Keramikstab aufweist. Die Kontaktierung zwischen Anschlußbeinchen und Lötbügel erfolgt über diesen Keramikstreifen. Aufgrund der niedrigen ohm'schen Widerstände dieses Lötbügels müssen zur Erzeugung der notwendigen Wärmemenge große elektrische Ströme durch den Lötbügel fließen. Dies erfordert eine aufwendige Schalt- und Regeltechnik und eine ebenfalls aufwendige Stromversorgung. Ferner ist bei großen Strömen eine äußerst niederohmige Anschlußtechnik notwendig. Hier gilt das Prinzip, daß die Wärme im Lötbügel entstehen soll und nicht an den elektrischen Anschlüssen des Lötbügels. Um diesbezügliche Nachteile weitestgehend auszuschließen, werden fallweise plangeschliffene und vergoldete Kontaktflächen an den Lötbügelerweiterungen eingesetzt. Mit Temperatursensoren in Form von zusätzlich aufgeschweißten Thermoelementen wird versucht, die Temperatur entlang der Lötbügelkante zu kontrollieren oder zu regeln.

Aus der Druckschrift IBM-Technical Disclosure Bulletin; Self-levelling soldering tool; Vol. 11, Nr. 8, January 1969, S. 1026 ist ein vollkeramischer Lötbügel bekannt, der zur Wärmeerzeugung Widerstandsdrähte eingelagert hat. Die mechanische Halterung geschieht am oberen Teil der keramischen Elemente.

Der Erfindung liegt die Aufgabe zugrunde, einen keramischen Lötbügel zur Verfügung zu stellen, der mittels einer Lötkante zum Löten von elektronischen Bauelementen ohne Spannungsabfall zwischen einzelnen Anschlußbeinchen einsetzbar ist und die für den Lötprozeß nötige Wärme gut wärmeleitend und mit geringen Verlusten an die Lötkante liefert.

Die Lösung dieser Aufgabe wird durch die Merkmale des Anspruches 1 widergegeben.

Der Erfindung liegt die Erkenntnis zugrunde, daß ein vollkeramischer und somit elektrisch nichtleitender Lötbügel weitergehende wesentliche Vorteile erzielt, wenn er aus gut wärmeleitendem Keramikmaterial besteht. Dies gilt insbesondere für die Lötkante. Zur Erzeugung der für den Prozeß nötigen Wärmemenge wird in unmittelbarer Nähe der Lötkante auf dem flächig ausgebildetem Keramiksubstrat mindestens ein ebenfalls flächig ausgebildeter elektrischer Widerstand aufgebracht. Die Aufbringung des elektrischen Widerstandes kann in Dünnfilm- oder Dickschichttechnik vorgenommen werden. Mittels des Widerstandes wird über Widerstandserwärmung die für den Lötprozeß nötige Energie bereitgestellt und über die gut wärmeleitende Keramik an die Lötkante, die auf die Anschlußbeinchen eines elektronischen Bauelementes aufsetzt, weitergegeben werden.

Eine vorteilhafte Ausgestaltung der Erfindung sieht die Ausbildung des Keramiksubstrates in Form einer rechteckigen Scheibe vor. Die beiden gegenüberliegenden großen Flächen der Scheibe dienen zur Halterung des Keramiksubstrates, beispielsweise durch Spannfutter und zur Aufbringung der Widerstände, wobei eine Schmalseite des Keramiksubstrates die Lötkante darstellt, die auf die Anschlußbeinchen angedrückt wird. Die Widerstände, die zur Erzeugung der Prozeßwärme dienen, sind im Bereich der Lötkante positioniert.

Um die Einspannung des Keramiksubstrates, d. h. die mechanische Halterung, gleichzeitig als elektrische Zuleitung ausnützen zu können, wird auf den großen Flächen der rechteckigen Scheibe jeweils eine flächige Metallschicht aufgebracht. Diese Metallschicht kann gleichzeitig mit den Widerständen aufgebracht werden.

Zur Gewährleistung einer gleichmäßigen Wärmebeaufschlagung an der Lötkante des Keramiksubstrates ist es vorteilhaft, mehrere Widerstände in gleichmäßiger Verteilung zur Lötkante aufzubringen.

Wird ein vorbestimmtes Temperaturprofil an der Lötkante gefordert, kann dies mittels Trimmwiderständen, die zwischen die einzelnen Widerstände zur Erzeugung der Prozeßwärme geschaltet sind, über unterschiedlich einstellbare Wärmeleistungen der einzelnen Widerstände erzeugt werden.

Eine vorteilhafte Ausgestaltung der Erfindung sieht einen Wärmewiderstand innerhalb des keramischen Lötbügels in Form einer Bohrungsreihe vor, die parallel zur Lötkante auf der der Lötkante gegenüberliegenden Seite der Widerstände durch nebeneinanderliegende Bohrungen dargestellt wird. Durch diese Bohrungsreihe wird der wirksame wärmeleitende Querschnitt des Lötbügels in Richtung der Halterung vermindert. Im Bedarfsfall können mehrere Bohrungsreihen hintereinander gelegt werden.

Bohrungen, die zur Verringerung des wärmeleitenden Querschnittes eingebracht wurden, können in vorteilhafter Weise gleichzeitig für Durchkontaktierungen verwendet werden.

Eine vorteilhafte Materialauswahl für das Keramiksubstrat, vorzugsweise für den Bereich der Lötkante, besteht in der Verwendung einer Keramik mit hoher Wärmeleitfähigkeit. Hier ist die Verwendung von Berylliumoxid oder Aluminiumnitrid besonders geeignet.

Im folgenden wird anhand einer schematischen Figur ein Ausführungsbeispiel beschrieben.

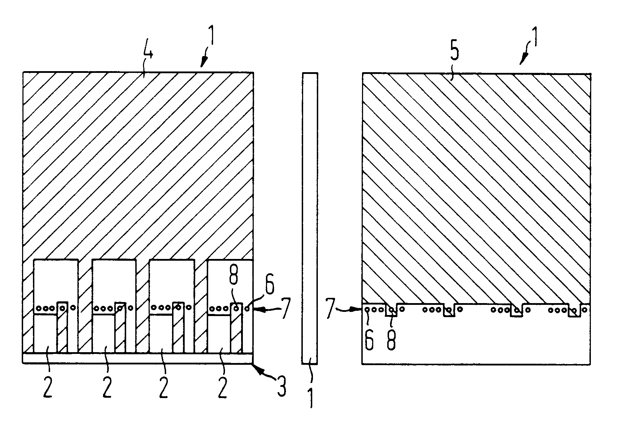

In der Figur ist von links nach rechts ein Keramiksubstrat 1 in der Frontansicht, in der Seitenansicht und in der rückwärtigen Ansicht dargestellt. Durch die Verwendung des vollkeramischen Lötbügels tritt beim Auflöten von elektronischen Bauelementen zwischen deren einzelnen Anschlußbeinchen kein Spannungsabfall auf. Dies wird durch die Verwendung einer Keramik, die elektrisch nicht leitend ist, erzielt. Gleichzeitig besteht das Keramiksubstrat aus einer gut wärmeleitenden Keramik, wie beispielsweise Aluminiumnitrid. Da kein Spannungsabfall an der Lötkante eines vollkeramischen Lötbügels auftritt, können diese Lötbügel für höhere Betriebsspannungen ausgelegt werden. Eine Auslegung bezüglich der Betriebsspannung und der von einem Widerstand aufzubringenden Heizleistung ist mit fachmännischem Wissen durchführbar. Die Dünnfilm- oder Dickschichttechnik, die zum Aufbringen eines Widerstandes auf das Keramiksubstrat verwendet wird, ist entweder durch das Aufdampfen oder Aufsputtern oder durch Siebdruckverfahren gekennzeichnet. In Dickschichttechnik aufgebrachte Strukturen enthalten meist Glasanteile. Die Herstellung von keramischen Lötbügeln erfolgt somit durch in der Elektrotechnik übliche Verfahren zur Beschichtung und Strukturierung von Keramiksubstraten.

Da die Auslegung der elektrischen Versorung eines keramischen Lötbügels bezüglich der Betriebsspannung somit nicht an enge Grenzen gebunden ist, kann auch mit relativ kleinen Strömen beim Aufheizen gearbeitet werden. Somit können grundsätzlich einfachere Stromversorgungen für den Betrieb eines derartigen Lötbügels Verwendung finden.

In der mittleren Darstellung der Figur ist lediglich das Keramiksubstrat 1 mit einer über die gesamte Höhe gleichbleibende Stärke gezeigt, wobei die untere Kante die Lötkante 3 darstellt. In der links gezeigten Frontansicht sind in diesem Fall vier Widerstände 2 durch Dünnfilmtechnik aufgebracht worden, wobei die elektrische Kontaktierung durch die Metallfolie 4 jeweils links und rechts der Widerstände 2 geschieht. Mittels der Durchkontakierung 8 wird die elektrische Verbindung zur auf der Rückseite befindlichen Metallschicht 5 hergestellt. Zur Handhabung des keramischen Lötbügels können beispielsweise Klemmbacken eingesetzt werden, die gleichzeitig die elektrischen Zuführungen für den Lötbügel darstellen. Dabei würden die Klemmbacken den Lötbügel im oberen Teil greifen und durch den Kontakt zu den Metallfolien 4, 5 die elektrische Versorgung gewährleisten. Die Bohrungsreihe 7, die aus einer Mehrzahl von Bohrungen 6 besteht, sorgt für einen erhöhten Wärmewiderstand, so daß eine bevorzugte Wärmestromrichtung zur Lötkante 3 vorherrscht.

Zur Kontrolle der Temperatur kann ein Heißleiter gleichzeitig beim Beschichtungsprozeß für die Widerstände 2 aufgebracht werden.

Die Lötkante 3 sollte unbeschichtet bleiben. Obwohl die Möglichkeit besteht, die gesamt aufgebrachte Struktur durch eine Glasurschicht ihrerseits zu überdecken und damit elektrisch zu isolieren, ist eine Aufbringung der Widerstände auf der Lötkante 3 nicht sinnvoll. Die Widerstände 2 müssen flächig und damit auf der Breitseite des Keramiksubstrates 1 aufgebracht sein. Die Widerstände 2, die zum Heizen dienen, sind in einem geringen Abstand entlang der Lötkante angeordnet und elektrisch parallel geschaltet. Durch Integration von Trimmwiderständen in oder zwischen die Heizwiderstände können im Bedarfsfall unterschiedliche Temperaturprofile entlang der Lötkante 3 eingestellt werden. Somit wird einem im Bedarfsfall unterschiedlichen Wärmebedarf zum Löten an verschiedenen Anschlußbeinchen Rechnung getragen. Dies kann beispielsweise durch unterschiedlich große Anschlußflecken bedingt sein.

Das Keramiksubstrat 1 stellt bei der erfindungsgemäßen Ausführung eines keramischen Lötbügels das eigentlich tragende Bauteil dar. Gleichzeitig wird bei der flächigen Ausgestaltung des Keramiksubstrates 1 eine Schmalseite als Lötkante 3 benutzt. Im Gegensatz zum Stand der Technik sind die elektrischen Leiter keine tragenden Teile. Durch die Verwendung eines bereits erwähnten Keramikmateriales, wie Aluminiumnitrid, wird eine Wärmeleitfähigkeit gewährleistet, die der von üblicherweise eingesetzten Metallen entspricht. Keramische Füllstoffe haben beispielsweise eine Wärmeleitzahl von mindestens 10 W/mK und Aluminiumnitrid hat je nach Modifikation eine Wärmeleitzahl von 30 - 150 W/mK.

## Patentansprüche

1. Keramischer Lötbügel zum Löten mittels Widerstandserwärmung, insbesondere zum Reflow-Löten von elektronischen Bauelementen, aus einem flächig ausgebildeten, elektrisch nichtleitenden und gut wärmeleitenden Keramiksubstrat (1) mit mindestens einer Lötkante (3),
**gekennzeichnet durch** mindestens einen in unmittelbarer Nähe der Lötkante (3) auf dem Keramiksubstrat (1) aufgebrachten, flächig ausgebildeten elektrischen Widerstand (2).

2. Keramischer Lötbügel nach Anspruch 1, **dadurch gekennzeichnet,** daß das Keramiksubstrat (1) in Form einer rechteckigen Scheibe dargestellt ist, wobei eine Schmalseite die Lötkante (3) bildet.

3. Keramischer Lötbügel nach Anspruch 2, **dadurch gekennzeichnet,** daß mindestens eine flächige Metallschicht (4, 5) auf einer Breitseite des Keramiksubstrates (1) als elektrische Zuleitung für die Widerstände (2) vorhanden ist.

4. Keramischer Lötbügel nach Anspruch 3, **dadurch gekennzeichnet,** daß mindestens zwei Metallschichten (4, 5) an gegenüberliegenden Seiten des Keramiksubstrates (1) aufgebracht sind.

5. Keramischer Lötbügel nach einem der vorhergehenden Ansprüche, **dadurch gekennzeichnet,** daß mehrere Widerstände (2) in annähernd gleichem Abstand und in gleichmäßiger Verteilung zur Lötkante (3) aufgebracht sind.

6. Keramischer Lötbügel nach einem der vorhergehenden Ansprüche, **dadurch gekennzeichnet,** daß Trimmwiderstände zwischen mehrere Widerstände (2) zur Erzeugung unterschiedlicher Heizleistungen integriert werden.

7. Keramischer Lötbügel nach einem der vorhergehenden Ansprüche, **dadurch gekennzeichnet,** daß mindestens eine annähernd parallel zur Lötkante (3) ausgerichtete Bohrungsreihe (7) auf der der Lötkante (3) gegenüberliegenden Seite der Widerstände (2) vorhanden ist.

8. Keramischer Lötbügel nach Anspruch 7, **dadurch gekennzeichnet,** daß Bohrungen (6) der Bohrungsreihe (7) gleichzeitig Durchkontaktierungen darstellen.

## Claims

1. Ceramic soldering element for soldering by means of resistance heating, in particular for reflow soldering of electronic components, consisting of a ceramic substrate (1) which is of planar design, is electrically non-conductive, is a good conductor of heat and has at least one soldering edge (3), characterized by at least one electrical resistor (2) which is applied to the ceramic substrate (1) directly next to the soldering edge (3) and is of planar design.

2. Ceramic soldering element according to Claim 1, characterized in that the ceramic substrate (1) is produced in the form of a rectangular wafer, one narrow side forming the soldering edge (3).

3. Ceramic soldering element according to Claim 2, characterized in that there is at least one planar metal layer (4, 5) on a wide side of the ceramic substrate (1) as an electrical feed line for the resistors (2).

4. Ceramic soldering element according to Claim 3, characterized in that at least two metal layers (4, 5) are applied to opposite sides of the ceramic substrate (1).

5. Ceramic soldering element according to one of the preceding claims, characterized in that a plurality of resistors (2) are applied at approximately the same spacing and in uniform distribution relative to the soldering edge (3).

6. Ceramic soldering element according to one of the preceding claims, characterized in that trimming resistors are integrated between a plurality of resistors (2) to produce different heating capacities.

7. Ceramic soldering element according to one of the preceding claims, characterized in that there is at least one row (7) of bores, directed approximately parallel to the soldering edge (3), on the side of the resistors (2) which is opposite the soldering edge (3).

8. Ceramic soldering element according to Claim 7, characterized in that bores (6) of the row (7) of bores at the same time constitute plated-through holes.

## Revendications

1. Étrier céramique de brasage pour réaliser le brasage à l'aide d'un chauffage par résistances, notamment pour le brasage reflow de composants électroniques, à partir d'un substrat céramique (1), réalisé avec une certaine étendue en surface, non conducteur électriquement et bon conducteur de la chaleur et possédant au moins une arête de brasage (3), caractérisé par au moins une résistance électrique (2) réalisée avec une certaine étendue en surface et disposée à proximité directe de l'arête de brasage (3) sur le substrat céramique (1).

2. Étrier céramique de brasage suivant la revendication 1, caractérisé par le fait que le substrat céramique (1) est réalisé sous la forme d'une plaque rectangulaire, dont un petit côté forme l'arête de brasage (3).

3. Étrier céramique de brasage suivant la revendication 2, caractérisé par le fait qu'au moins une couche métallique (4,5) d'une certaine étendue en surface est présente sur un grand côté du substrat céramique (1), en tant que conducteur d'alimentation électrique pour les résistances (2).

4. Étrier céramique de brasage suivant la revendication 3, caractérisé par le fait qu'au moins deux couches métallique (4,5) sont disposées sur des côtés opposés du substrat céramique (1).

5. Étrier céramique de brasage suivant l'une des revendications précédentes, caractérisé par le fait que plusieurs résistances (2) sont disposées en étant réparties uniformément et approximativement à une distance constante de l'arête de brasage (3).

6. Étrier céramique de brasage suivant l'une des revendications précédentes, caractérisé par le fait que des résistances d'ajustement sont intégrées entre plusieurs résistances (2) servant à délivrer des puissances de chauffage différentes.

7. Étrier céramique de brasage suivant l'une des revendications précédentes, caractérisé par le fait qu'au moins une rangée de perçages (9), alignés approximativement parallèlement à l'arête de brasage (3), est présente sur le côté des résistances (2), qui est situé en vis-à-vis de l'arête de brasage (3).

8. Etrier céramique de brasage suivant la revendication 7, caractérisé par le fait que des perçages (6) de la rangée de perçages (7) constituent simultanément des contacts traversants.
